# EUROPÄISCHE PATENTSCHRIFT

(11) **EP 2 213 448 B1**
(45) Veröffentlichungstag und Bekanntmachung des Hinweises auf die Patenterteilung: **12.10.2011**
(21) Anmeldenummer: 10004172.2
(22) Anmeldetag: 18.05.2004
(51) Int. Cl.: B30B 5/06, B27N 3/24, B29C 43/48

(54) **Verfahren zur Regelung des Stahlbandlaufes in einer kontinuierlich arbeitenden Presse und eine Anlage zur Durchführung des Verfahrens**
Method and installation for guiding a steel band in a continuously operating press
Procédé et installation pour le guidage d'une bande d'acier dans une presse à travail en continu

(30) Priorität: 18.05.2003 DE 10322227
(43) Veröffentlichungstag der Anmeldung: 04.08.2010
(62) Teilanmeldung aus: 04011805.1
(73) Patentinhaber: Dieffenbacher GmbH Maschinen- und Anlagenbau, 75031 Eppingen (DE)
(72) Erfinder: Graf, Matthias, 75015 Bretten (DE)
(74) Vertreter: Hartdegen, Anton

(56) Entgegenhaltungen:
- DE-A1- 2 643 346
- DE-A1- 4 017 791
- DE-A1- 4 234 213
- DE-A1- 19 931 176
- GB-A- 2 350 095
- US-A- 4 527 686

## Beschreibung

Die Erfindung bezieht sich auf ein Verfahren zur Regelung des Stahlbandlaufes in einer kontinuierlich arbeitenden Presse gemäß Oberbegriff des Anspruchs 1 und eine Anlage zur Durchführung des Verfahrens gemäß dem Oberbegriff des Anspruchs 8.

Bei der Herstellung von Holzwerkstoffplatten aus Spänen, Fasern und/oder Schnitzeln oder der Herstellung von anderen Platten aus lignozellulosehaltigen Stoffen oder auch Kunststoffplatten werden in der Industrie zunehmend kontinuierlich arbeitende Pressen verwendet.

Die bekannten kontinuierlich arbeitenden Pressen weisen in der Regel bereits eine hohe Verfügbarkeit auf. Analysiert man die Ursachen für die Nichtverfügbarkeiten nach einer ABC-Analyse, stellt man fest, daß die häufigsten Stillstände einer kontinuierlich arbeitenden Presse durch Stahlband- und/oder Rollstangenverlauf zu verzeichnen sind.

Zur Regelung des Bandlaufes werden heute die Regelung der Antriebs- bzw. Auslauftrommeln und einer oder mehrere Bandregelwalzen im Rücklaufsystem der kontinuierlich arbeitenden Pressen eingesetzt. Problematisch sind Störgrößen, die im Pressbereich auf die Stahlbänder einwirken. Solche Störgrößen können zum Beispiel durch Schwankungen im Streugewicht entstehen. Dichteunterschiede im Pressgut, die zu asymmetrischen Kräfteprofilen in der kontinuierlich arbeitenden Presse führen, das heißt einseitige Streuüberhöhungen führen zum Beispiel zu einer spezifischen Druckerhöhung auf dieser Seite, die zu erhöhten Reibkräften im System Stahlband-Rollstangen-Abrollfächen führen. Die Reibkräfte üben einen Lenkeffekt auf die Stahlbänder in der Form aus, daß ein oder beide Stahlbänder auf die Seite mit dem höheren spezifischen Druck wandern bzw. verlaufen. Über die Schrägstellung der Auslauftrommeln bzw. Antriebstrommeln in der Horizontal-Ebene durch Stellantriebe wird dem Bandverlauf entgegengewirkt, um das Stahlband so im zulässigen Bereich der kontinuierlich arbeitenden Presse zu halten. Durch die Schrägstellung der Antriebstrommeln wirken Rückstellkräfte auf das Stahlband ein. Allerdings sind die Stahlbänder im Pressbereich durch den hohen Pressdruck massiv eingespannt, so daß die im Auslauf ansetzenden Rückstellkräfte nur bedingt eine Rückwirkung in den Pressbereich haben.

Bei zunehmend länger werdenden kontinuierlich arbeitenden Pressen wird die Effektivität der Schrägstellung der Antriebstrommein als Regelmechanismus immer geringer und somit schwindet auch die Fähigkeit, dem System aufgezwungene Störgrößen auszugleichen bzw. entgegenzuwirken.

Nach dem bekannten Stand der Technik aus DE 40 17 791 C2, von dem die Erfindung ausgeht, erfolgt die Regelung des Stahlbandlaufs und die Rückstellung des Bandverlaufs dadurch, daß die Achsverstellung an einer Längsseite um den Winkel Beta an der Umlauf- und/oder der Antriebstrommelachse zumindest zu Beginn einer Verstellung eines Rahmenteils erfolgt, der durch die Kurzhubzylinder im Hochdruckbereich aus eine horizontalen Lage in eine derartige Schräglage gefahren wird, daß in Einlaufrichtung links oder rechts ein Druck- oder Wegprofil eingeregelt wird. Dabei wird durch ein bewußtes Schrägstellen der Gestelle ein asymmetrisches Druckprofil im Pressgut erzeugt und somit ein Lenkeffekt auf das Stahlband bewirkt, der von der Wirkweise identisch ist mit dem oben beschriebenen Mechanismus.

Dabei wird die Heizplatte im üblichen Betrieb nur bereichsweise einseitig angehoben. Eingebaute Verlaufssensoren im Pressbereich geben die aktuelle Position des Stahlbandes in der Presse wieder und dienen als Eingangssignal für die Regelung der Heizplattenschrägstellung. Mit diesem Verfahren können auch sehr lange kontinuierlich arbeitende Presse sicher im Bandverlauf beherrscht werden. Allerdings hat dieses Verfahren auch Nachteile. Am gravierendsten ist die Tatsache, dass durch das einseitige Anheben der Heizplatten, die Spanplattentoleranzen negativ beeinträchtigt werden. Andere Platteneigenschaften wie beispielsweise die Querzugsfestigkeit oder das Dichteprofil werden ebenfalls in Mitleidenschaft gezogen bzw. können asymmetrisch über die Plattenbreite auftreten. Zudem ist die Effektivität nicht immer zufrieden stellend. Wird bereichsweise die Heizplatte angehoben, entsteht in nachfolgenden Bereichen in denen die Heizplatte wieder parallel liegt, auf der zuvor angehobenen Seite, ein überhöhter spezifischer Pressdruck, der dem zuvor erzielten Bandlenkeffekt entgegenwirkt. Es kann deshalb nicht als ständiger Regelmechanismus verwendet werden, sondern ist nur zur Not-Bandverlaufsregelung in Extremsituationen einsetzbar.

Aus der DE 199 31 176 A1 ist ein Verfahren gemäß dem Oberbegriff des Anspruchs 1 und eine Anlage gemäß dem Oberbegriff des Anspruchs 8 zur Stahlbandführung in einer kontinuierlich arbeitende Presse bekannt geworden, in der die Zurückstellung der Stahlbänder in die Längsachse I-I durch eine Achsverstellung der Rollstangeneinführungswelle um eine zentrale Drehachse III-III auf der Längsachse I-I erfolgt, wobei die Rollstangen je nach Achsstand der Rollstangeneinführungswellen im Einlaufbereich abweichend von der Orthogonalen, schräg in den Pressbereich eingeführt werden und durch ihre Laufrichtung einseitige Schubkräfte auf die Stahlbänder ausüben, die quer zur Längsachse wirken und korrigierend auf den Stahlbandverlauf einwirken.

Aus der DE 198 10 553 A1 ist eine Vorpresse für eine kontinuierlich arbeitende Presse bekannt geworden, die aus zwei endlos umlaufenden Bändern besteht, wobei zwischen den umlaufenden Bändern hydraulische Stellglieder mit entsprechenden Widerlager die Pressgutmatte verdichten, bevor diese in die kontinuierlich arbeitende Presse einläuft. Vorpressen dienen in erster Linie dazu das locker gestreute Material der Pressgutmatte einer schonenden Vorverdichtung zu unterwerfen um überschüssige Luft, bedingt durch den Streuprozess bei Bildung der Pressgutmatte, aus dieser zu entfernen.

Der Erfindung liegt die Aufgabe zugrunde ein Verfahren anzugeben, mit dem das aus der Längsachse verlaufende Stahlband und/oder die Rollstangen im Pressbereich im Lauf ohne negative Einflüsse auf das Produkt in Richtung Ideallinie rückstellend beeinflusst werden kann und eine Anlage zu schaffen zur Durchführung des Verfahrens.

Die Lösung dieser Aufgabe besteht für das Verfahren darin, dass die Rückstellung der Stahlbänder in die Längsachse der kontinuierlich arbeitenden Presse durch die Verwendung einer schräg vorverdichteten Pressgutmatte erfolgt.

Eine Anlage zur Durchführung dieses Verfahrens besteht nach Anspruch 8 darin, dass eine Vorpresse und/oder eine Verdichterrolle zur Herstellung einer schräg vorverdichteten Pressgutmatte einseitig anhebbar oder absenkbar ausgebildet sind.

Bei der erfindungsgemäßen Lösung der Aufgabe ist insbesondere von Vorteil, dass kein negativer Einfluß auf die Qualität bzw. die Werkstoffeigenschaften und die Maßhaltigkeit der fertigen Platte durch die Rückstellung der Stahlbänder auftritt. Durch eine bewusste Schrägstellung einer Längsseite der Vorpresse macht sich eine starke Auswirkung auf den Bandverlauf bemerkbar und eine Rückstellung des verlaufenden Stahlbandes kann eingeregelt werden. Als erforderliche hydraulische Stellglieder können dafür die bereits vorhandenen Vorpressdruckeinheiten zur Einstellung des Vorpressspaltes verwendet werden. Entscheidend ist jedoch, dass bei diesem Verfahren das Endprodukt, die Holzwerkstoffplatte, in ihren Eigenschaften nicht beeinflusst wird, da die einseitig verdichtete Pressgutmatte nur im Einlaufspalt der kontinuierlich arbeitenden Presse auf das Stahlband und/oder die Rollstangen korrigierend einwirkt aber nicht im Hauptpressbereich. Um das einseitige Anheben der Keilverdichtereinlaufplatte durch die schräg vorverdichtete Pressgutmatte zum Lenken der Rollstangen und des Stahlbandes nutzen zu können, muss es in die Bandlaufregeleinrichtung eingebunden werden. Hierzu ist es möglich den Rollstangen- und/oder Stahlbandverlauf im Pressspalt durch Verlaufssensoren zu messen und danach eine Längsseite der Vorpresse schräg einzustellen und mit der einseitig höheren Pressgutmatte auf den Keilverdichtereinlauf (KVE) einzuwirken. Dabei wird das Anheben durch eine Wegregelung oder indirekt durch eine druckgeregelte oder druckgesteuerte Entlastung in den Zylindern der Vorpressdruckeinheiten oder deren Stellantriebe durchgeführt.

Ein oder mehrere in der Pressenmitte, im Einlaufspalt und/oder im Auslauf der kontinuierlich arbeitenden Presse angebrachte Verlaufssensoren registrieren die vorhandene Lage der Stahlbänder. Mit dieser Information wird über einen Regelkreis und Regelungsprozessor und einen PID-Regler die erforderliche Rückstellbewegung durch die Vorpressdruckeinheiten durchgeführt.

Zum Ausgleich von grundlegenden Bandverlaufstendenzen kann eine Grundeinstellung mit fest eingestelltem Differenzhub oder eine fest eingestellte Druckdifferenz dienen.

Eine vorteilhafte Weiterbildung des erfindungsgemäßen Verfahrens besteht darin, dass die Rückstellung der Stahlbänder durch eine einseitig stärkere Verdichtung der Pressgutmatte mittels einer zwischen der Vorpresse und der kontinuierlich arbeitenden Presse angeordneten Verdichterrolle erfolgt, wodurch ebenfalls eine von der Planparallelität abweichende Querschnittsform entsteht, die mit der höheren Längsseite der Pressgutmatte einen höheren Gegendruck an der Einlaufplatte des Keilverdichtereinlaufs erzeugt.

Statt dem Anheben ist es möglich, dass die einseitige Beeinflussung eines oder beider Stahlbänder zur Rückstellung in die Längsachse I-I der kontinuierlich arbeitenden Presse durch ein zeitlich begrenztes einseitiges Absenken einer der Längsseiten der Vorpresse oder der Verdichterrolle erfolgt.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: die Anlage zur Durchführung des Verfahrens nach der Erfindung in Seitenansicht,
- Figur 2: einen Querschnitt der Pressgutmatte nach einem Schnitt A-A aus Figur 1
- Figur 3: die kontinuierlich arbeitende Presse nach Figur 1 für die Durchführung des Verfahrens,
- Figur 4: die kontinuierlich arbeitende Presse nach Figur 3 in Draufsicht und

- Figur 5: die kontinuierlich arbeitende Presse nach Figur 1 mit Verdichterrolle.

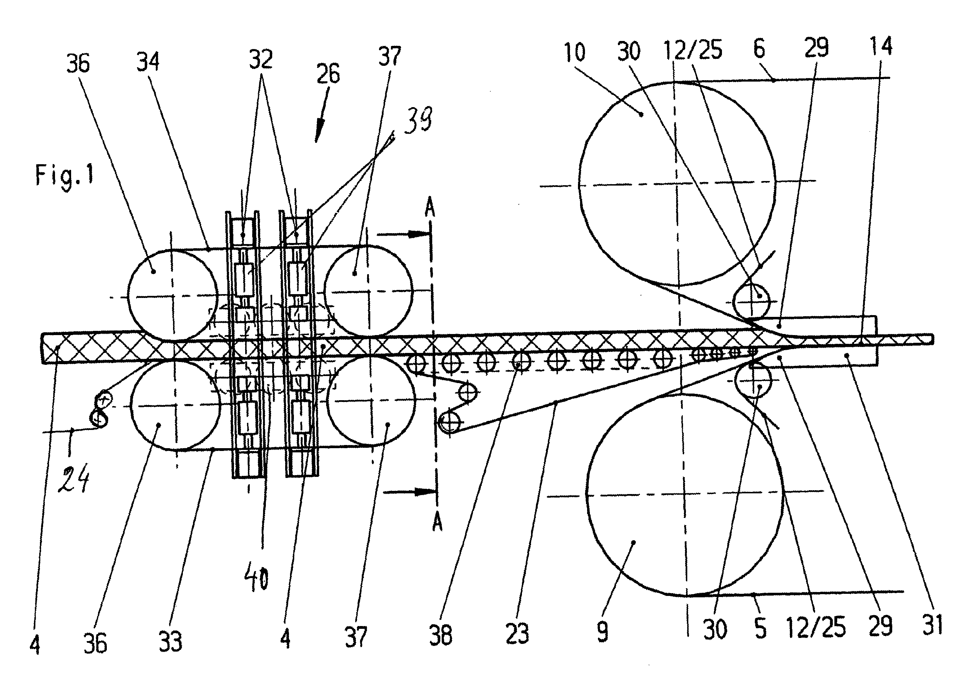

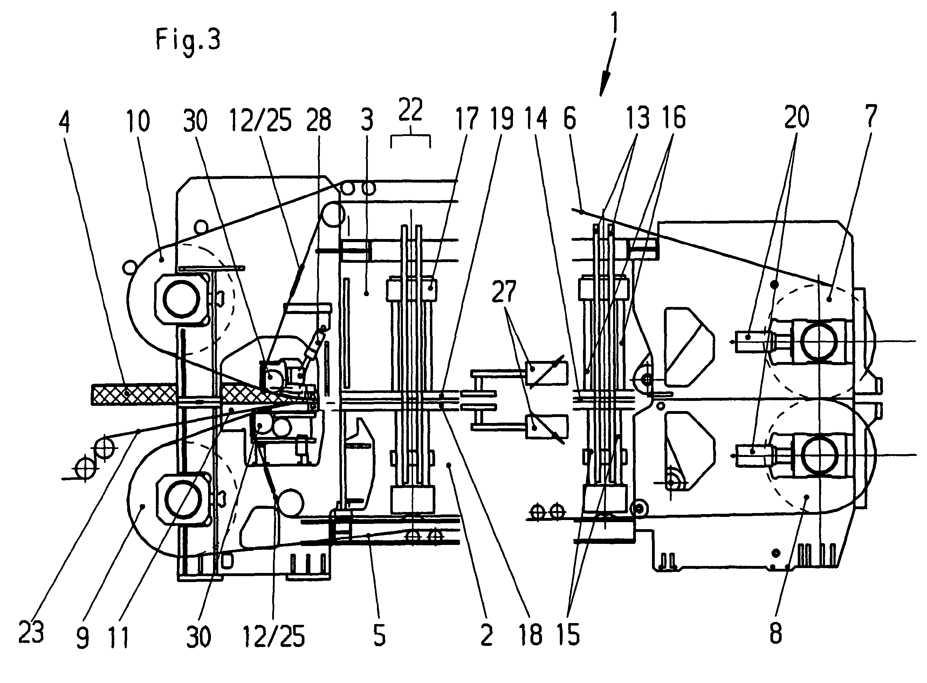

Die Anlage zur Durchführung des Verfahrens besteht nach den Figuren 1 bis 5 in ihren Hauptteilen aus der Vorpresse 26 und der kontinuierlich arbeitenden Presse 1. Weiter aus dem festen unteren Rahmenteil 2, dem beweglichen über Zylinderkolbenanordnungen 17 heb- und senkbaren oberen Rahmenteil 3 und den Zugrahmen-Pressenständern 22. Am oberen Rahmenteil 3 und unteren Rahmenteil 2 sind als Verlängerung Seitenschilder 21 fest angebracht und dienen als Verankerung und Lagerstelle für die Antriebstrommeln 7 und 8, für die Einlauftrommeln 9 und 10 und den Zylinderkolbenanordnungen 17. Der obere Rahmenteil 3 und der untere Rahmenteil 2 bestehen nur aus Stegblechen 15 und 16. Mehrere Zugrahmen-Pressenständer 22 bilden durch Aneinanderreihung und Anbringung der beheizten und/oder kühlbaren Pressplatten 18 und 19 die Länge L von Rahmenteil 3 und Rahmenteil 2 und somit der kontinuierlich arbeitenden Presse 1. Die aus den Stegblechen links und rechts herausragenden Ansätze bzw. Auskragungen mit den Zuglaschen 13 wirken als Widerlager für die Zylinderkolbenanordnungen 17 zum Heben und Senken des oberen Rahmenteils 3 mit den beheizbaren Pressplatten 18 und 19.

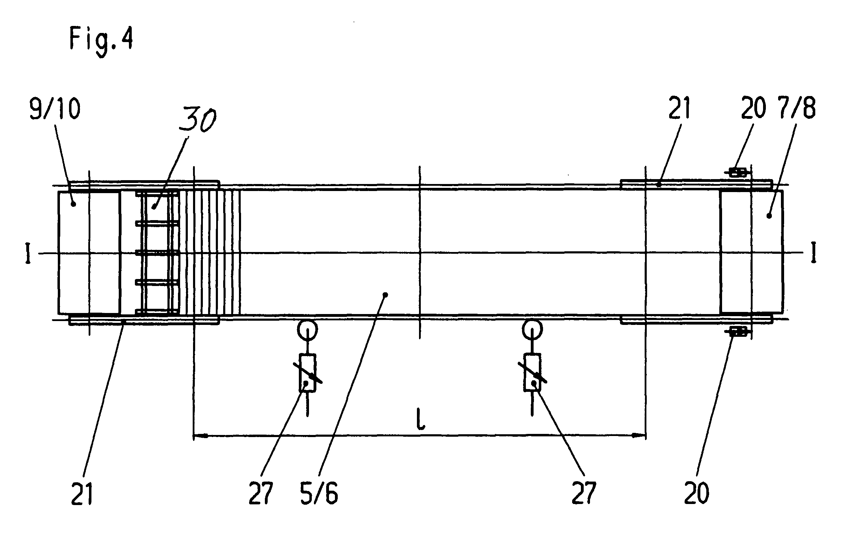

Aus den Figuren 1, 3 und 5 ist weiter zu entnehmen, wie die Einlauftrommeln 9 und 10 den Einlaufspalt 11 bilden und wie sich die mit den Stahlbändern 5 und 6 um die Rahmenteile 2 und 3 umlaufenden in Führungsketten 25 geführten Rollstangen 12 gegen Widerlager der Rahmenteile 2 und 3 abstützen. Das heißt, die umlaufenden Rollstangen 12 sind zwischen den Pressplatten 18 und 19 und den Stahlbändern 5 und 6 mitrollend geführt und werden von Rollstangeneinführungsrädern 30 orthogonal ausgerichtet den Stahlbändern 5 und 6 übergeben. Die Pressgutmatte 4 wird mit dem Formband 24 der Vorpresse 26 übergeben, mit dem Beschickband 23 über die Stahlbänder 5 und 6 in den Einlaufspalt 11 sowie in den Pressbereich der kontinuierlich arbeitenden Presse 1 bzw. Pressspalt 14 eingeführt. Die Einjustierung und Grobregulierung der Stahlbänder 5 und 6 nach Figur 4 erfolgt weiter auf die Längsachse I-I durch Verstellung der Antriebstrommelachsen mittels der Stellantriebe 20.

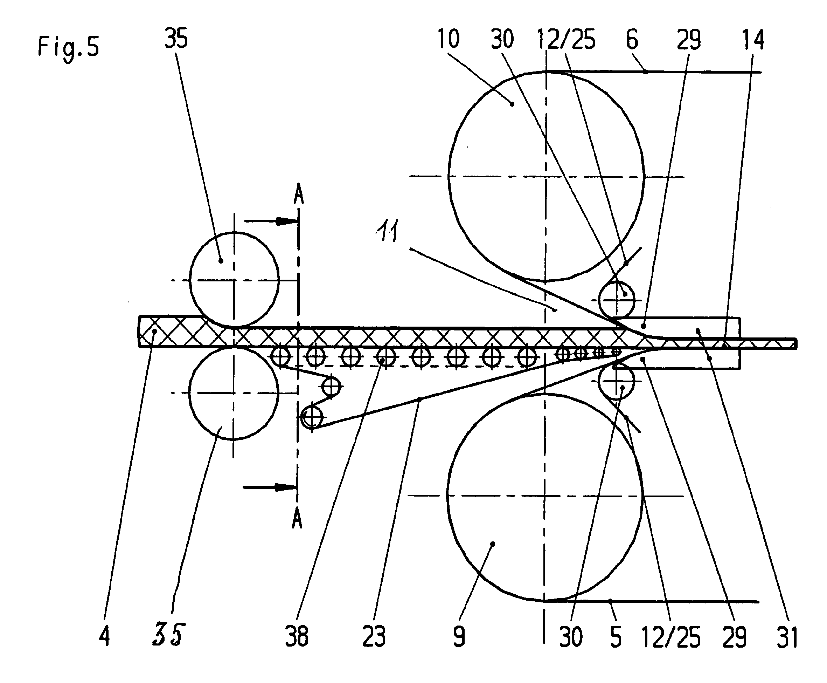

Wie aus DE 43 01 594 C2 bekannt, besteht der Einlaufbereich nach den Figuren 1 und 5 aus dem Keilverdichtereinlauf 31 mit der Einlaufplatte 29 und dem Rollstangeneinführungsrad 30. Der Kompressionswinkel im Einlaufspalt 11 ist mittels der auf die Einlaufplatte 29 heb- und senkbar wirkenden Stellenantriebe 28 einstellbar.

Die Vorpresse 26 besteht bekannterweise aus dem Gestell 32 oder Pressenrahmen, dem Vorpressbändern 33 und 34, die jeweils oberhalb und unterhalb der Pressgutmatte 4 um die Antriebsrollen 37, den Druckrollen 40 und den Umlenkrollen 36 umlaufend geführt sind, sowie die den Vorpressdruck ausübenden, aus Zylindern und Kolben bestehenden hydraulischen Vorpressdruckeinheiten 39. Aus der Vorpresse kommend wird die Pressgutmatte 4 über Stützrollen 38 geführt mit dem Beschickband 23 der kontinuierlich arbeitenden Presse 1 übergeben.

Durch die Vorpresse 26 und dem Rollstangeneinlaufwerk nach den Figuren 1 bis 5 und mit einer Bandverlaufsregelung wird eine feinfühlige Stahlbandverlaufsregelung ermöglicht, wobei die Zurückstellung der Stahlbänder 5 und 6 in die Längsachse I-I gemäß der Erfindung durch ein einseitiges Anheben eines der Längsseiten der Vorpresse 26 und dadurch mit der schräg geformten Pressgutmatte 4 erfolgt. Damit entsteht eine einseitige Erhöhung der Pressgutmatte 4 und ein einseitiger Gegendruck auf die Einlaufplatte 29 die damit auf die Stellbänder 5 und 6 rückstellend einwirkt.

Nach Figur 5 erfolgt die Rückstellung der Stahlbänder 5 und/oder 6 durch ein einseitiges Anheben einer zwischen der Vorpresse 26 und den Rollstangeneinführungsrädern 30 angeordneten Verdichterrolle 35, so dass sich ebenfalls eine einseitige Erhöhung der Pressgutmatte 4 einstellt.

Die Verdichterrolle 35 kann zweckmäßigerweise mit einer Gegenrolle als Kalander auf die Pressgutmatte 4 einwirken. Die Verdichterrollen 35 reichen dabei beidseitig über die Breite der Stahlbänder 5 und 6 hinaus und sind hier mittels Stellantriebe (nicht dargestellt) vertikal verstellbar.

Die Rückstellung der Stahlbänder 5 und 6 parallel und längs der Längsachse I-I wird eingeleitet aufgrund der Mess-Signale von an der kontinuierlich arbeitenden Presse 1 angeordneten und an den Stahlbänderkanten kontaktgebenden Verlaufssensoren 27. Dabei wertet ein Regelungsprozessor die Istmeßwerte der Sensoren aus und ermittelt über einen Regelalgorithmus Ausgangssignale, die als Stellwertsignale an die Vorpressdruckeinheit 39 ausgegeben werden und somit mit der einseitig erhöhten Pressgutmatte 4 dem Stahlbandverlauf entgegenwirken.

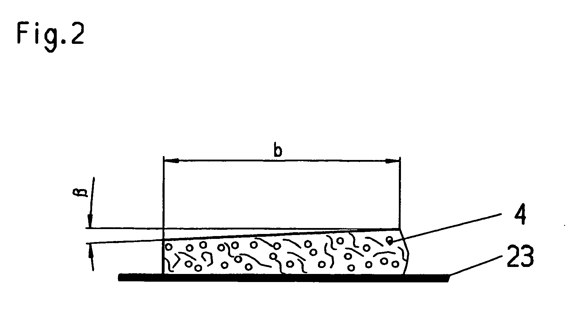

Wie die Figur 2 zeigt, weist die Pressgutmatte 4 durch die einseitige Belastung an einer Längsseite eine um den Winkel β erhöhte Querschnittshöhe auf.

### Bezugszeichenliste

- 1.: kontinuierlich arbeitende Presse
- 2.: Rahmenteil unten
- 3.: Rahmenteil oben
- 4.: Pressgutmatte
- 5.: Stahlband unten
- 6.: Stahlband oben
- 7.: Antriebstrommel unten
- 8.: Antriebstrommel oben
- 9.: Einlauftrommel unten
- 10.: Einlauftrommel oben
- 11.: Einlaufspalt
- 12.: Rollstangen
- 13.: Zuglaschen
- 14.: Pressspalt
- 15.: Stegblech unten
- 16.: Stegblech oben
- 17.: Zylinderkolbenanordnungen
- 18.: Pressenplatte unten
- 19.: Pressenplatte oben
- 20.: Stellantrieb für Antriebstrommeln waagrecht
- 21.: Seitenschilder
- 22.: Zugrahmen-Pressenständer
- 23.: Beschickband
- 24.: Formband

- 25.: Führungsketten
- 26.: Vorpresse
- 27.: Verlaufssensoren
- 28.: Stellantrieb
- 29.: Einlaufplatte von Keilverdichtereinlauf
- 30.: Rollstangeneinführungsrad
- 31.: Keilverdichtereinlauf (KVE)
- 32.: Gestell zu 26
- 33.: Vorpressband unten
- 34.: Vorpressband oben
- 35.: Verdichterrollen
- 36.: Umlenkrolle
- 37.: Antriebsrolle
- 38.: Stützrollen
- 39.: Vorpressdruckeinheit
- 40.: Druckrollen
- β: Querschnittswinkel der Pressgutmatte 4
- I-I: Längsachse der kontinuierlich arbeitenden Presse 1
- b: Breite der Pressgutmatte

## Patentansprüche

1. Verfahren zur Regelung des Stahlbandlaufes in einer kontinuierlich arbeitenden Presse (1) zur Herstellung von Spanplatten, Faserplatten und Sperrholzplatten oder Kunststoffplatten, mit den Pressdruck übertragenden sowie das zu pressende Gut durch die Presse ziehenden, flexiblen, endlosen Stahlbändern (5 und 6), wobei die Pressgutmatte (4) auf einem sich kontinuierlich bewegendem Formband (24) in den Einlaufbereich der kontinuierlich arbeitenden Presse (1) zwischen die Stahlbänder (5 und 6) in den Pressspalt (14) eingeführt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder (5, 6) aus der Längsachse (I-I) mittels an den Stahlbandlängskanten angeordneten Verlaufssensoren (27) gemessen und mit einer Bandlaufregeleinrichtung in die Längsachse (I-I) der kontinuierlich arbeitenden Presse eingeregelt wird, **dadurch gekennzeichnet, dass** die Rückstellung der Stahlbänder (5, 6) in die Längsachse (I-I) der kontinuierlich arbeitenden Presse (1) durch die Verwendung einer schräg vorverdichteten Pressgutmatte (4) erfolgt.

2. Verfahren nach Anspruch 1, **dadurch gekennzeichnet, dass** die einseitige Verdichtung der Pressgutmatte (4) durch Absenken oder Anheben einer der Längsseiten einer Vorpresse (26) und/oder einer Seite einer Verdichterrolle (35) erfolgt.

3. Verfahren nach Anspruch 1 oder 2, **dadurch gekennzeichnet, dass** mittels der höheren Längsseite der Pressgutmatte (4) ein einseitig höherer Gegendruck an der Einlaufplatte (29) zur Rückstellung des zu regelnden Stahlbandes (5, 6) bewirkt wird.

4. Verfahren nach einem oder mehreren der Ansprüche 1 bis 3, **dadurch gekennzeichnet, dass** die Rückstellung des aus der Längsachse (I-I) verlaufenden Stahlbandes (5 oder 6) durch ein zeitlich begrenztes weggeregeltes oder indirekt durch eine druckgeregelte oder druckgeregeltes Anheben oder Absenken der Vorpresse (26) und/oder der Verdichterrolle (35) erfolgt.

5. Verfahren nach einem oder mehreren der Ansprüche 1 bis 4, **gekennzeichnet durch** einen Regelkreis mit dem die Rückstellung der Stahlbänder (5 und 6) mittels der ermittelten Verlaufsmesswerte eines oder mehrerer Verlaufssensoren (27) und einem PID-Regler erfolgt.

6. Verfahren nach einem oder mehreren der Ansprüche 1 bis 5, **dadurch gekennzeichnet, dass** in einem Regelkreis ein Regelungsprozessor die Istmeßwerte der Verlaufssensoren (27) auswertet und über einen Regelalgorithmus Ausgangssignale ermittelt, die als Stellwertsignale an die Vorpresse (26) und/oder an die Verdichterrollen (35) ausgegeben werden.

7. Verfahren nach einem oder mehreren der Ansprüche 1 bis 6, **gekennzeichnet durch** eine Grundeinstellung mit einem fest eingestelltem Differenzhub oder einer fest eingestellten Druckdifferenz.

8. Anlage zur Durchführung des Verfahrens nach einem der Ansprüchen 1 bis 7 umfassend eine kontinuierliche Vorpresse (26) und/oder eine Verdichterrolle (35) vor arbeitenden Presse (1) zur Herstellung von Spanplatten, Faserplatten und Sperrholzplatten oder Kunststoffplatten, mit den Pressdruck übertragenden sowie das zu pressende Gut durch die Presse ziehenden, flexiblen, endlosen Stahlbändern (5 und 6), wobei die Pressgutmatte (4) auf einem sich kontinuierlich bewegendem Formband (24) in den Einlaufbereich der kontinuierlich arbeitenden Presse (1) zwischen die Stahlbänder (5 und 6) in den Pressspalt (14) eingeführt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder (5, 6) aus der Längsachse (I-I) mittels an den Stahlbandlängskanten angeordneten Verlaufssensoren (27) gemessen und mit einer Bandlaufregeleinrichtung in die Längsachse (I-I) der kontinuierlich arbeitenden Presse eingeregelt wird, **dadurch gekennzeichnet, dass** die Vorpresse (26) und/oder die Verdichterrolle (35) zur Herstellung einer schräg vorverdichteten Pressgutmatte (4) einseitig anhebbar oder absenkbar ausgebildet sind.

9. Anlage nach Anspruch 8, **dadurch gekennzeichnet, dass** die Verdichterrolle (35) mit Gegenrolle als Kalander ausgebildet ist und sich über die ganze Breite (b) der Pressgutmatte (4) erstreckt.

## Claims

1. Process for controlling the steel belt tracking in a continuously operating press (1) for manufacturing chipboards, fiber panels and plywood panels or plastic panels, with the flexible, endless steel belts (5 and 6) that transmit the press pressure and pull the material to be pressed through the press, in which case the press material mat (4) is transported into the infeed area of the continuously operating press (1) on a continuously moving forming belt (24) and guided in between the steel belts (5 and 6) and into the press gap (14), the steel belts (5 and 6) are guided by means of drive drums (7 and 8) and infeed drums (9 and 10) around an upper and lower frame part (2 and 3) and support themselves with an adjustable press gap (14) by means of co-rotating roller rods (12) with their axes at right angles to the belt running direction against counter-bearings on heated press plates (18 and 19) attached to the frame parts (2 and 3), in which case the track of the steel belts (5, 6) away from the lengthways axis (I-I) is measured by means of track sensors (27) arranged on the lengthways edges of the steel belt and is controlled by means of a belt tracking control device in the lengthways axis (I-I) of the continuously operating press,
**characterized in that**
the return of the steel belts (5, 6) into the lengthways axis (I-I) of the continuously operating press (1) is performed by using an obliquely precompressed press material mat (4).

2. The process in accordance with Claim 1,
**characterized in that** a one-sided compaction of the press material mat (4) is achieved by lowering or raising one of the lengthways sides of a prepress (26) and/or one side of a compressing roller (35).

3. The process in accordance with Claim 1 or 2,
**characterized in that** the higher lengthways side of the press material mat (4) exerts a higher counterpressure against the infeed plate (29) on one side in order to return the steel belt (5, 6) that is to be controlled.

4. The process in accordance with one or more of Claims 1 to 3,
**characterized in that** the return of the steel belt (5 or 6) running out of the lengthways axis (I-I) is performed by a time-limited, position-controlled raising or lowering of the prepress (26) and/or the precompressing roller (35), or indirectly by means of such raising or lowering under pressure control.

5. The process in accordance with one or more of Claims 1 to 4,
**characterized by** a control circuit with which the return of the steel belts (5 and 6) is performed using the obtained tracking measurement values of one or more tracking sensors (27) and a PID controller.

6. The process in accordance with one or more of Claims 1 to 5,
**characterized in that** in a control loop, a control processor evaluates the actual measured values of the tracking sensors (27) and uses a control algorithm to calculate output signals which are output as positioning value signals to the prepress (26) and/or the compressing rollers (35).

7. The process in accordance with one or more of Claims 1 to 6,
**characterized by**
a basic setting with a set differential stroke or a set pressure differential.

8. Machine for performing the process according to one of the Claims 1 to 7 comprising a continuous prepress (26) and/or a precompressing roller (35) in front of a continuously operating press (1) for manufacturing chipboards, fiber panels and plywood panels or plastic panels, with the flexible, endless steel belts (5 and 6) that transmit the press pressure and pull the material to be pressed through the press, in which case the press material mat (4) is transported into the infeed area of the continuously operating press (1) on a continuously moving forming belt (24) and guided in between the steel belts (5 and 6) and into the press gap (14), the steel belts (5 and 6) are guided by means of drive drums (7 and 8) and infeed drums (9 and 10) around an upper and lower frame part (2 and 3) and support themselves with an adjustable press gap (14) by means of co-rotating roller rods (12) with their axes at right angles to the belt running direction against counter-bearings on heated press plates (18 and 19) attached to the frame parts (2 and 3), in which case the track of the steel belts (5, 6) away from the lengthways axis (I-I) is measured by means of track sensors (27) arranged on the lengthways edges of the steel belt and is controlled by means of a belt tracking control device in the lengthways axis (I-I) of the continuously operating press,
**characterized in that**
the prepress (26) and/or the compressing roller (35) are configured to allow for raising or lowering on one side in order to manufacture an obliquely precompressed press material mat (4).

9. The machine in accordance with Claim 8, **characterized in that** the precompressing roller (35) is configured with a counter-roller as calander, and extends across the entire width (b) of the press material mat (4).

## Revendications

1. Procédé pour la régulation de l'avancement du feuillard d'acier dans une presse à fonctionnement continu (1) pour la production de panneaux d'agglomérés, panneaux en fibres et panneaux en contreplaqué ou panneaux en matière plastique, avec les feuillards d'acier continus flexibles (5 et 6) transmettant la pression de pressage et tirant le produit à presser à travers la presse, dans quel cas le tapis de produit à presser (4) est inséré sur une courroie de moulage à mouvement continu (24) dans la zone d'entrée de la presse fonctionnant en continu (1) entre les feuillards d'acier (5 et 6) dans la fente de pressage (14), les feuillards d'acier (5 et 6) étant passés par des tambours d'entraînement (7 et 8) et les tambours d'alimentation (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation du tapis sur des supports sur les éléments de châssis (2 et 3) contre les plaques de pression chauffées (18 et 19), dans quel cas l'alignement des feuillards d'acier (5, 6) est mesuré sur l'axe longitudinal (I-I) par des capteurs d'alignement (27) disposés au niveau des bords des feuillards d'acier (5, 6) et réglé au moyen d'un dispositif de réglage d'alignement de tapis sur l'axe longitudinal (I-I) de la presse à fonctionnement continu,
**caractérisé par le fait**
**que** le repositionnement des feuillards d'acier (5, 6) sur l'axe longitudinal (I-I) de la presse à fonctionnement continu (1) est réalisé au moyen d'un tapis de produit à presser (4) précomprimé en diagonale.

2. Procédé selon la revendication 1, **caractérisé par le fait que** la compression unilatérale du tapis de produit à presser (4) est obtenu par l'abaissement ou le levage d'un des côtés longitudinaux d'une presse de préformage (26) et/ou d'un côté d'un rouleau de compression (35).

3. Procédé selon la revendication 1 ou 2,
**caractérisé par le fait qu'**au moyen d'un côté longitudinal plus élevé du tapis de produit à presser (4), une contrepression unilatéralement plus élevée est obtenue au niveau de la plaque d'entrée (29) pour le repositionnement du feuillard d'acier (5, 6) à régler.

4. Procédé selon une ou plusieurs des revendications 1 à 3,
**caractérisé par le fait**
**que** le repositionnement du feuillard d'acier (5 ou 6) dévié de l'axe longitudinal (I-I) est réalisé par le levage ou l'abaissement de la presse de préformage (26) et/ou du rouleau de compression (35) par réglage de course de manière temporelle ou indirectement par réglage de pression.

5. Procédé selon une ou plusieurs des revendications 1 à 4,
**caractérisé par**
un circuit de régulation, qui réalise le repositionnement des feuillards d'acier (5 et 6) au moyen des valeurs de mesure d'alignement déterminés par un ou plusieurs capteurs d'alignement (27) ou un régulateur PID.

6. Procédé selon une ou plusieurs des revendications 1 à 5,
**caractérisé par le fait qu'**un processeur de régulation analyse dans un circuit de régulation des valeurs de mesure réelles des capteurs d'alignement (27) et détermine au moyen d'un algorithme de régulation des signaux de sortie qui sont transmis à la presse de préformage (26) et/ou aux rouleaux de compression (35) an tant que signaux de valeurs de réglage.

7. Procédé selon une ou plusieurs des revendications 1 à 6,
**caractérisé par** un réglage de base avec une course différentielle réglée en fixe ou une pression différentielle réglée en fixe.

8. Installation pour la réalisation du procédé selon l'une des revendications 1 à 7, comprenant une presse de préformage continue (26) et/ou un rouleau de compression (35) en amont d'une presse à fonctionnement continu (1) pour la production de panneaux d'agglomérés, panneaux en fibres et panneaux en contreplaqué ou panneaux en matière plastique, avec les feuillards d'acier continus flexibles (5 et 6) transmettant la pression de pressage et tirant le produit à presser à travers la presse, dans quel cas le tapis de produit à presser (4) est inséré sur une courroie de moulage à mouvement continu (24) dans la zone d'entrée de la presse fonctionnant en continu (1) entre les feuillards d'acier (5 et 6) dans la fente de pressage (14), les feuillards d'acier (5 et 6) étant passés par des tambours d'entraînement (7 et 8) et les tambours d'alimentation (9 et 10) autour d'un élément de châssis supérieur et inférieur (2 et 3) et reposant avec la fente de pressage réglable (14) via des barres de rotation (12) libres disposées avec leurs axes dans le sens transversal par rapport au sens de rotation du tapis sur des supports sur les éléments de châssis (2 et 3) contre les plaques de pression chauffées (18 et 19), dans quel cas l'alignement des feuillards d'acier (5, 6) est mesuré sur l'axe longitudinal (I-I) par des capteurs d'alignement (27) disposés au niveau des bords des feuillards d'acier (5, 6) et réglé au moyen d'un dispositif de réglage d'alignement de tapis sur l'axe longitudinal (I-I) de la presse à fonctionnement continu,
**caractérisé par le fait**
**que** la presse de préformage (26) et/ou le rouleau de compression (35) sont réalisés de sorte à pouvoir être levés ou abaissés sur un côté pour la production d'un tapis de produit à presser (4) précomprimé en diagonale.

9. Installation selon la revendication 8,
**caractérisé par le fait que** le rouleau de compression (35) avec le contrerouleau est réalisé sous forme de calandre et s'étend sur toute la largeur (b) du tapis de produit à presser (4).
